# DEMANDE DE BREVET EUROPEEN

(11) **EP 4 554 023 A1**
(43) Date de publication de la demande: **14.05.2025**
(21) Numéro de dépôt: 24200096.6
(22) Date de dépôt: 12.09.2024
(51) Int. Cl.: H02G 3/18, A47B 21/06, H02G 3/12

(54) **PRISE ELECTRIQUE A PORTS USB ET MODALITES DE SON INSTALLATION A L'INTERIEUR D'UN LOGEMENT TRAVERSANT QUE COMPORTE UNE PAROI D'UN MEUBLE**

(30) Priorité: 10.11.2023 FR 2312320
(71) Demandeur: Societe Financiere Veron (Sofive), 83700 Saint Raphaël (FR)
(72) Inventeur: VERON, Stéphane, 83700 Saint Raphaël (FR)
(74) Mandataire: Macquet, Christophe

(57) **Abrégé**

La prise (1) comporte un boîtier (5) délimité entre une paroi supérieure (6) surplombant un fond (7) inférieur du boîtier (5), et une paroi latérale (8) périphérique du boîtier (5). Le boîtier (5) loge des colonnes (21a, 21b) comportant un débouché (22) vers l'extérieur du boîtier (5) et logeant des sabots (16a, 16b) crantés (14) qui sont manoeuvrables par des vis de manoeuvre (17a, 17b). Les sabots (16a, 16b) sont guidés en coulissement à l'intérieur des colonnes (21a, 21b), entre une station inactive des sabots (16a, 16b) escamotés à l'intérieur des colonnes (21a, 21b) et une station active des sabots (16a, 16b) émergeant à travers le débouché latéral (22) des colonnes (21a, 21b), leur crantage (14) procurant un ancrage de la prise (1) à l'intérieur de la paroi du meuble.

## Description

### DOMAINE DE L'INVENTION

L'invention relève du domaine des prises à ports USB équipant une paroi d'un meuble, tel qu'un plan de travail d'un meuble - table ou bureau par exemple - pour connecter un appareil électronique tel qu'un ordinateur, un écran ou un téléphone portable par exemple. L'invention concerne l'agencement d'une telle prise à ports USB et les modalités de son installation à l'intérieur d'une paroi d'un meuble.

### ART ANTERIEUR

Il est courant d'équiper une paroi d'un meuble, tel que par exemple un plan de travail mobilier, d'une prise électrique à ports USB, comportant des connecteurs USB via lesquels un appareil électronique peut être alimenté en énergie électrique. La prise à ports USB est installée à l'intérieur d'un logement que comporte le plan de travail, et les connecteurs USB sont alimentés en énergie électrique à partir d'un convertisseur de courant raccordé à une source d'alimentation en énergie électrique.

La dénomination USB est communément identifiée d'après l'acronyme de l'expression en langue anglaise Universal Serial Bus ou en langue française Bus Universel en Série. Une prise peut être équipée de divers connecteurs USB, tels qu'un connecteur USB-C, USB-A ou USB-B, qui sont de conformations différenciées et/ou délivrant des puissances électriques différentes. Un avantage des connecteurs USB-C est d'être bidirectionnels et de permettre la délivrance d'une puissance électrique plus importante que les connecteurs USB-A ou USB-B. Selon un agencement courant, la prise électrique comporte un boîtier monté à l'intérieur d'un logement traversant que comporte le plan de travail. La prise est connectée au convertisseur fournissant l'alimentation du ou des connecteurs USB en énergie électrique, le convertisseur étant lui-même raccordé à une source d'énergie électrique de puissance, par un câble notamment.

Le boîtier est muni d'un organe de maintien en suspension à l'intérieur du logement, et est potentiellement équipé à sa périphérie d'organes de centrage à l'intérieur du logement. Une paroi supérieure du boîtier comporte à son travers une ou plusieurs ouvertures à travers lesquelles le ou les connecteurs USB sont accessibles par un utilisateur pour connecter un appareil électronique à la prise.

Dans ce contexte, il est constaté que la fréquence et/ou les efforts de mise en coopération ou inversement de retrait par l'utilisateur des connecteurs USB coopérants avec celui ou ceux équipant la prise, pouvaient altérer la qualité et la pérennité de son maintien en position correcte à l'intérieur du plan de travail.

Il en ressort qu'un problème à résoudre est d'organiser la prise de sorte que son installation et son maintien à l'intérieur du logement soit robuste, fiable et pérenne. Cependant, il est aussi a contrario constaté qu'il est au moins opportun :
- ) que la prise en elle-même soit intrinsèquement robuste et pérenne et d'un fonctionnement fiable, malgré une fréquence d'utilisations potentiellement soutenue ;
- ) que la prise soit ergonomique pour son utilisateur. Il est à tenir compte que l'épaisseur de la paroi d'un meuble et/ou son extension suivant son plan peuvent être modestes. Dans ce contexte il est à éviter que la prise présente un encombrement susceptible d'être cause d'une gêne pour l'utilisateur, notamment au regard d'une émergence inopportune de la prise hors de la paroi d'un meuble, tel que par exemple une émergence de la prise sous et/ou excessive au-dessus d'un plan de travail. Il est à tenir compte que la prise est couramment munie d'un capot installé hors du logement en émergeant à la face supérieure du plan de travail, et qui par suite est exposé à des heurts potentiels, tant verticalement que latéralement ;
- ) que la prise soit ergonomique pour l'assemblage de ses composants entre eux, et pour son installation robuste par un monteur à l'intérieur du logement qui la reçoit. Il est souhaitable que l'agencement de la prise préassemblée permette son installation à l'intérieur du logement qui soit aisée et rapide à effectuer. Inversement, il est aussi utile de permettre un accès rapide et aisé aux composants logés à l'intérieur de la prise, pour permettre d'éventuelles opérations de maintenance et/ou de réparation des composants de la prise. Il est globalement à éviter de complexifier les gestes à effectuer par le monteur.

### RESUME DE L'INVENTION

Dans ce contexte l'invention a pour objet :
- ) une prise électrique équipée de connecteurs USB, qui est agencée pour être installée à l'intérieur d'un logement traversant une paroi d'un meuble, tel que notamment un plan de travail mobilier, et
- ) des modalités de montage de la prise électrique à l'intérieur dudit logement traversant que comporte la paroi du meuble.

Le but de l'invention est de rechercher des compromis et de proposer des solutions compatibles et/ou combinées entre elles, pour surmonter au moins les problèmes et les difficultés connexes dont le constat a été préalablement exposé.

Pour ce faire, il est proposé une prise électrique à ports USB du type agencée pour son installation à l'intérieur d'un logement traversant que comporte un plan de travail par exemple. Le logement est orienté suivant une direction verticale qui est perpendiculaire au plan d'extension du plan de travail, en débouchant à chacune de ses extrémités verticales respectivement à la face supérieure et à la face inférieure du plan de travail. La prise s'étend suivant une direction verticale en correspondance avec la direction verticale d'extension du logement traversant que comporte le plan de travail, de sorte que la prise puisse être installée ou retirée par coulissement vertical à l'intérieur du logement.

Il est précisé ici les notions relatives utilisées pour décrire l'invention, comme notamment les notions suivantes :
- ) Les notions supérieure et inférieure, ou autres notions apparentées comme par exemple sous et dessus ou au-dessus, ou encore surplomb ou rehausse et contrebas, base et sommet, sont des notions relatives considérées suivant la direction verticale d'extension de la prise électrique et/ou du logement qui la reçoit, au regard du sens d'introduction de la prise à l'intérieur d'un plan de travail considéré pour exemple. La notion d'élévation est définie selon un sens inverse audit sens d'introduction, depuis la base vers le sommet de la prise électrique.
- ) La notion latérale est notamment appliquée à une position distante de et/ou à une extension parallèle à la direction verticale d'extension de la prise électrique et/ou la direction verticale d'extension du logement.
- ) La notion transversale est une notion relative considérée perpendiculairement à la direction d'extension verticale de la prise électrique et/ou à la direction verticale d'extension du logement, considéré selon l'exemple d'application de l'invention à un plan de travail.

Plus spécifiquement, la prise comporte un boîtier dont le volume intérieur est délimité entre une paroi supérieure surplombant un fond inférieur du boîtier. Une paroi latérale périphérique du boîtier s'étend entre la paroi supérieure et le fond du boîtier. La prise comporte aussi un capot supérieur comportant un passage d'accès vers au moins un connecteur USB
- ci-après désigné par connecteur(s) de service - via lequel un utilisateur peut raccorder un appareil électronique à alimenter en énergie électrique. Le capot supérieur, conformé en disque évidé, ménage un masque de couverture du boîtier en reposant en application verticale contre la face supérieure d'un plan de travail.

Le boîtier est de préférence pourvu d'organes d'appui transversal à distance latérale du boîtier, les notions transversal et distance latérale étant appliquées ici au dit appui. Les organes d'appui sont constitutifs d'organes de centrage de la prise à l'intérieur du logement qui la reçoit, par application des organes d'appui contre la paroi d'un plan de travail délimitant le logement.

La prise à ports USB comporte ledit au moins un connecteur(s) de service, dont l'extrémité supérieure traverse une ouverture que comporte la paroi supérieure du boîtier et qui débouche sur un passage ménagé à travers le capot supérieur. Le connecteur(s) de service est ainsi accessible par un utilisateur à travers le capot supérieur et l'ouverture que comporte la paroi supérieure du boîtier. La mise en coopération entre le connecteur(s) de service et un connecteur coopérant équipant l'appareil électronique, est potentiellement réalisée par emboîtement direct ou via un câble intermédiaire.

La prise électrique est aussi munie d'un connecteur d'alimentation de la prise en énergie électrique, ci-après désigné par connecteur d'alimentation. Le connecteur d'alimentation est raccordable à un convertisseur de courant électrique distant de la prise - notamment par câble - via lequel le connecteur(s) de service est alimenté en énergie électrique par le connecteur d'alimentation.

Le convertisseur est notamment installé sur le meuble à distance de la prise électrique. Le meuble présentant souvent une architecture spécifique, le positionnement du convertisseur sur le meuble est alors choisi par le monteur pour éviter que le convertisseur ne soit une source de gêne ou d'inconfort pour l'utilisateur.

Une particularité de la prise est reconnaissable en ce qu'elle est équipée d'un mécanisme de blocage de la prise à l'intérieur du logement qui la reçoit, via les dits organes d'appui transversal dont elle est équipée. Le mécanisme de blocage comporte les dits organes d'appui transversal qui sont formés par des sabots crantés manoeuvrables par des vis de manoeuvre. Les sabots sont manoeuvrables entre une station inactive dans laquelle les sabots sont escamotés à l'intérieur du boîtier et une station active dans laquelle les crans saillants que comportent les sabots émergent hors du boîtier, pour leur incrustation dans la masse cohésive du plan de travail par suite d'un déplacement des sabots par les vis de manoeuvre. Il en résulte un blocage robuste à l'intérieur du plan de travail de la prise préalablement introduite en position d'installation dans le logement du plan de travail qui la reçoit, de préférence en corrélation avec d'autres aménagements avantageux de la prise décrits plus loin.

Les sabots sont logés et manoeuvrés entre leur station inactive et leur station active, à l'intérieur de réserves ménagées par des colonnes identiques qui s'étendent en élévation entre le fond et la paroi supérieure du boîtier. Les colonnes sont intégrées à la paroi latérale périphérique et au fond du boîtier, en étant chacune individuellement ménagées par un cloisonnement du volume intérieur du boîtier qui est intégré à la paroi latérale du boîtier et à son fond.

Les sabots et les réserves présentent des profils transversaux complémentaires, les réserves ménageant des couloirs de guidage des sabots entre leur station active et leur station inactive. Au moins un jeu de deux colonnes dont les réserves logent respectivement les sabots équipant la prise, sont ménagées à l'intérieur du boîtier symétriquement à distance transversale l'une de l'autre par rapport à une direction verticale d'extension de la prise sur laquelle la prise est centrée.

Les colonnes comportent chacune un débouché latéral ménagé à travers la paroi périphérique du boîtier et ouvert vers l'extérieur de la prise, pour autoriser l'émergence progressive des crans dont sont munis les sabots qui émergent progressivement et partiellement transversalement hors des colonnes. Ledit débouché latéral est orienté transversalement en vis à vis d'une paroi latérale des colonnes formant des rampes de guidage des sabots entre leur station inactive et leur station active. Il est compris que le déplacement en élévation des sabots contre les rampes de guidage, peut être effectué tant selon une direction ascendante depuis leur station inactive vers leur station active pour réaliser l'ancrage de la prise à l'intérieur du plan de travail, qu'inversement selon une direction descendante depuis leur station active vers leur station inactive pour autoriser en cas de besoin un retrait de la prise hors du plan de travail, tel que pour effectuer par exemple une opération de maintenance de la prise.

Les vis de manoeuvre sont logées à l'intérieur du boîtier en contrebas de sa paroi supérieure, en étant manoeuvrables en rotation par un opérateur via un outil, tel qu'un tournevis par exemple. Les vis de manoeuvre sont individuellement accessibles depuis l'extérieur du boîtier par l'outil qui est introduit à l'intérieur du boîtier via des passages traversant sa paroi supérieure. Les colonnes comportent des cloisons supérieures de clôture des réserves qui sont inclinées par rapport à la direction verticale d'extension de la prise. Lesdites cloisons supérieures ménagent au sommet des colonnes des chambres logeant la tête des vis de manoeuvre qui traversent les cloisons supérieures via un conduit les guidant en prise par vissage à l'intérieur des sabots.

Les faces arrière des sabots sont appliquées contre les rampes de guidage qui leur sont affectées, pour leur guidage en coulissement à l'intérieur des réserves entre leur station active et leur station inactive. Les rampes de guidage sont inclinées par rapport à l'axe vertical d'extension de la prise depuis le fond du boîtier en direction du débouché latéral des colonnes suivant une pente constante. La face avant des sabots munie du crantage s'étend parallèlement à la direction verticale d'extension de la prise, en procurant un ancrage des sabots dans la masse du plan de travail lors de leur manoeuvre par les vis de manoeuvre.

Plus précisément, les rampes de guidage, les faces arrière des sabots ainsi que les vis de manoeuvre, sont inclinées identiquement selon une pente constante par rapport à la direction verticale d'extension de la prise, depuis le fond du boîtier en direction du débouché latéral des colonnes. En station inactive, les sabots sont logés à l'intérieur des réserves en fond du boîtier, le crantage dont les sabots sont munis pouvant subsidiairement légèrement émerger hors des réserves. Par suite du déplacement en élévation des sabots par les vis de manoeuvre, les sabots coulissent suivant ladite pente constante le long des rampes de guidage vers leur station active, les crans des sabots pénétrant dans la masse du plan de travail.

La robustesse du maintien de la prise à l'intérieur du plan de travail est évaluée par l'opérateur manoeuvrant progressivement et alternativement les vis de manoeuvre des sabots à l'intérieur des colonnes, en corrélation avec une prise d'appui du boîtier contre la face supérieure du plan de travail. Ceci a pour effet de procurer un blocage de la prise à l'intérieur du logement du plan de travail qui la reçoit, à partir d'un enserrement vertical du boîtier entre son épaulement et les sabots ancrés dans la masse du plan de travail.

Par ailleurs les colonnes - de préférence au nombre de deux - sont orientées transversalement en vis-à-vis ménagent entre elles un espace transversalement médian de réception d'une carte électronique à l'intérieur du boîtier. La carte électronique est équipée au moins du ou des connecteurs de service et du connecteur d'alimentation qui délivre - via la carte électronique - l'énergie électrique au(x) connecteur(s) de service. La carte électronique est montée à l'intérieur du boîtier verticalement suivant son plan entre les colonnes, en étant orientée perpendiculairement à un écart transversal de distanciation des colonnes l'une de l'autre.

Le (s) connecteur(s) de service est installé au sommet de la carte électronique et le connecteur d'alimentation est installé à la base de la carte électronique, en étant orientés parallèlement au plan d'extension de la carte électronique. Le(s) connecteur(s) de service et le connecteur d'alimentation sont montés verticalement sur la carte électronique respectivement à son sommet et à sa base, pour faciliter leur accès depuis l'extérieur du boîtier.

Le ou les connecteurs de service sont accessibles depuis l'extérieur du boîtier à travers l'ouverture ou les ouvertures d'extension verticale qui leurs sont affectés et que comporte la paroi supérieure du boîtier, via le ou les passages d'extension verticale que comporte le capot supérieur équipant la prise. Le connecteur d'alimentation est accessible depuis l'extérieur du boîtier à travers une ouverture d'extension verticale que comporte le fond du boîtier.

La carte électronique est montée à l'intérieur du boîtier via des rails en vis-à-vis qui sont intégrés à la face interne de la paroi latérale périphérique du boîtier. De préférence, la paroi supérieure du boîtier et le fond du boîtier intègrent chacun un jeu de taquets s'étendant verticalement et transversalement à l'intérieur du boîtier, en étant disposés en zone médiane de la carte électronique suivant son extension transversale. La carte électronique est maintenue en position stable suivant son plan d'extension à son sommet entre les taquets intégrés à la paroi supérieure du boîtier, et à sa base entre les taquets intégrés au fond du boîtier.

On notera que les colonnes et les rails sont intégrés au boîtier à sa paroi latérale périphérique et à son fond, tel que par formation du boîtier par moulage. Les colonnes sont intégrées à la paroi latérale périphérique au boîtier transversalement en vis-à-vis suivant une première direction transversale. Les rails d'installation de la carte électronique sont intégrés à la paroi latérale périphérique au boîtier transversalement en vis-à-vis suivant une deuxième direction transversale qui est perpendiculaire à la première direction transversale.

Les colonnes et lesdits rails d'extensions verticales qui sont intégrés à la paroi latérale du boîtier, sont conjointement constitutifs d'une armature de renfort du boîtier. Les colonnes limitées au nombre de deux pour ménager l'espace de réception de la carte électronique entre elles, coopèrent néanmoins avec les rails de montage de la carte électronique pour rigidifier la paroi latérale périphérique. En outre, le renfort du boîtier est complété verticalement par un assemblage vertical robuste entre la paroi supérieure du boîtier et le fond du boîtier, tel que visé plus loin.

Il en ressort que les modalités de renfort du boîtier et/ou de son soutien ferme à l'intérieur du logement traversant procuré par les sabots placés en position active, ainsi que les colonnes et les organes mécaniques qu'elles logent pour la fixation de la prise au plan de travail via les sabots, sont isolés de l'espace intérieur du boîtier logeant les organes électroniques réputés fragiles équipant la prise - notamment la carte électronique munie des connecteurs - qui sont ainsi protégés.

L'espace ménagé transversalement entre les colonnes facilite pour un monteur l'introduction de la carte électronique en position de montage à l'intérieur du boîtier, via les rails que comporte la paroi latérale périphérique du boîtier. Un maintien stable en position de la carte électronique à l'intérieur du boîtier est obtenu via les jeux de taquets qui sont répartis transversalement à l'intérieur du boîtier entre les colonnes. Les tranches latérales de la carte électronique sont enfilées verticalement à l'intérieur des rails et ses tranches inférieures et supérieures sont emboîtées verticalement entre les taquets intégrés respectivement à la paroi supérieure du boîtier et au fond du boîtier.

Un renfort vertical du boîtier est réalisé par un assemblage robuste par vissage entre le fond du boîtier et sa paroi supérieure. Plus particulièrement à cet effet, Des vis de fixation s'étendent chacune verticalement à l'intérieur du boîtier, depuis le fond du boîtier vers sa paroi supérieure. Un opérateur manoeuvre depuis l'extérieur du boîtier les vis de fixation qui traversent le fond du boîtier et qui sont chacune introduites respectivement à l'intérieur d'un jeu de fûts coaxiaux qui leurs sont respectivement affectés et qui sont disposés à distance de la carte électronique. Chacun des jeux de fûts coaxiaux est composé d'un fût de guidage des vis de fixation qui est solidaire du fond du boîtier, et qui est coaxial à un fût de fixation qui est solidaire de la paroi supérieure du boîtier et à l'intérieur duquel les vis de fixation sont vissées.

Selon une variante de réalisation, les vis peuvent être respectivement vissées dans des fûts monoblocs solidaires de la paroi supérieure du boîtier, les fûts monoblocs comportant à leur base un tronçon lisse de guidage des vis de fixation, qui est prolongé vers leur sommet par un tronçon fileté à l'intérieur duquel les vis de fixation sont vissées.

La paroi supérieure du boîtier et le fond du boîtier, sont ainsi fermement fixés entre eux par les fûts à l'intérieur desquels sont profondément vissées les vis de fixation, en renforçant verticalement le boîtier par la fixation robuste entre la paroi supérieure du boîtier et le fond du boîtier. Les fûts et les vis de fixation qu'ils logent respectivement ménagent en outre collectivement une armature interne de renfort supplémentaire du boîtier suivant sa direction verticale d'extension.

La paroi supérieure et le fond du boîtier sont reliés entre eux non seulement par la paroi latérale périphérique du boîtier qui est renforcée verticalement et transversalement par les colonnes et les rails intégrés et répartis angulairement solidairement à la paroi latérale périphérique du boîtier et à son fond, mais aussi par les fûts à l'intérieur desquels sont vissées les vis de fixation en formant des tirants renforçant le boîtier verticalement entre son fond et sa paroi supérieure.

En outre :
- ) Le boîtier et les composants de la prise qu'il loge peuvent être préalablement assemblés en station inactive des sabots escamotée à l'intérieur des réserves, notamment en atelier. Le boîtier forme un tout monobloc robuste logeant les organes fonctionnels de la prise, en étant facilement manipulable par un monteur. Le boîtier peut être aisément introduit par le monteur à l'intérieur du logement, jusqu'à l'application contre la face supérieure du plan de travail d'un épaulement qui est intégré à la paroi supérieure du boîtier.
- ) Le boîtier étant logé en un tout en suspension à l'intérieur du logement via ledit épaulement de la paroi supérieure du boîtier, le monteur peut facilement fixer fermement le boîtier à l'intérieur du logement via les vis de manoeuvre des sabots, depuis l'extérieur du boîtier à partir de la face supérieure du plan de travail. Le boîtier étant renforcé, l'ancrage de la prise à l'intérieur du plan de travail peut être robuste sans altérer la prise dont le boîtier est renforcé.
- ) L'épaulement de la paroi supérieure du boîtier forme un organe de soutien de la prise en suspension sur le plan de travail, et coopère verticalement avec les sabots placés en station active pour bloquer le boîtier à l'intérieur du plan de travail, par serrage vertical du boîtier à l'intérieur du plan de travail entre sa paroi supérieure et les sabots manoeuvrés depuis la paroi supérieure du boîtier.
- ) La cloison supérieure des colonnes reliant entre elles leurs cloisons latérales, est exploitée pour participer au déplacement vertical des sabots entre leur station inactive et leur station active. Les vis de manoeuvre et les sabots sont installés à l'intérieur des colonnes, évitant ainsi d'impacter la carte électronique pour la préserver.
- ) En station active des sabots, leur ancrage dans la masse cohésive du plan de travail renforce et pérennise le maintien robuste en position stable de la prise à l'intérieur du logement, malgré des utilisations répétées de la prise.

Le boîtier logeant les organes fonctionnels de la prise forme un tout robuste, tout en étant d'un encombrement limité. Le boîtier est renforcé et la prise est fermement maintenue en position à l'intérieur du logement :
- ) par soutien via l'épaulement que comporte la paroi supérieure du boîtier qui est fermement fixée au fond du boîtier, et par l'ancrage des sabots dans la masse du plan de travail provoquant un placage ferme du boîtier contre le plan de travail ;
- ) par le renforcement d'une part de la paroi latérale du boîtier par lesdits cloisonnements ménageant les colonnes et par les rails, et d'autre part par le serrage vertical par vissage entre la paroi supérieure et le fond du boîtier ;
- ) par renforcement intrinsèque de la paroi supérieure du boîtier via laquelle la prise est soutenue à l'intérieur du logement, de par son assemblage au fond du boîtier via les vis de fixation solidarisées par vissage aux fûts de fixation qui sont intégrés à la paroi supérieure du boîtier. Les vis de fixation et les fûts de fixation forment conjointement des tirants de rigidification verticale du boîtier en s'étendant entre sa paroi supérieure et son fond contre lequel les têtes des vis de fixation prennent appui à sa face extérieure orientée vers l'extérieur du boîtier.

Le capot équipant la prise est globalement conformée en un disque évidé d'habillage de la paroi supérieure du boîtier. Le disque prend appui horizontalement via sa face inférieure contre la face supérieure du plan de travail en formant un masque de la paroi supérieure du boîtier. L'évidement du disque procure un passage d'accès au(x) connecteur(s) de service qui sont accessibles à travers la ou les ouvertures que comporte la paroi supérieure du boîtier.

Le disque est conformé en assiette en étant formé d'une paroi dont la bordure périphérique ménage à sa base une assise d'application du disque contre la face supérieure du plan de travail. La paroi formant le disque s'étend en élévation en rehausse de sa base, en comportant des flancs concourants qui sont inclinés l'un par rapport à l'autre. Un premier flanc du disque est un flan périphérique dont le bord périphérique ménage l'assise du disque en application contre la face supérieure du plan de travail. Le flanc périphérique s'élève en élévation en étant incliné par rapport à l'assise du disque, jusqu'à une zone d'inflexion de la paroi du disque ménageant un deuxième flanc du disque incliné vers le bord intérieur du disque délimitant son évidement.

L'inclinaison inverse l'un par rapport à l'autre des flancs du disque ménage entre eux une nervure de renfort du disque. L'évidement du disque est exploité pour centrer le disque sur le boîtier, par emboîtement ajusté de l'évidement du disque autour d'une rehausse cylindrique intégrée à la face supérieure de la paroi supérieure du boîtier. La nervure de renfort est exploitée pour la fixation du disque à la paroi supérieure du boîtier par crochetage.

A cet effet, le disque intègre des crochets - de préférence intégrés à la nervure de renfort pour renforcer ledit crochetage - qui coopèrent par emboîtement pivotant du disque avec des saignées réparties en périphérie de l'épaulement de la paroi supérieure du boîtier. Il en ressort que le disque est intrinsèquement rigidifié par la nervure de renfort et que son emboîtement sur le boîtier par crochetage - avantageusement via la nervure de renfort - est robuste.

En cas de heurts d'impact modéré appliqués latéralement ou verticalement contre le disque, le disque est maintenu en position en application contre la face supérieure du plan du travail. La robustesse de la prise en est confortée et son maintien en position correcte à l'intérieur du logement est sécurisée vis-à-vis des potentiels heurts latéraux et/ou verticaux d'impacts modérés. En outre, la conformation en assiette du disque ménagée par le deuxième flanc du disque forme un guide visuel et/ou tactile pour l'utilisateur, facilitant le geste de raccordement par l'utilisateur de l'appareil électronique au connecteur(s) de service équipant la prise.

Synthétiquement au titre de ce qui précède, l'invention a pour objet une prise électrique à ports USB d'équipement d'une paroi d'un meuble - tel que notamment un plan de travail mobilier - à l'intérieur d'un logement traversant qu'elle comporte, la prise électrique s'étendant suivant une direction verticale. En position d'installation à l'intérieur dudit logement, la prise électrique s'étend à l'intérieur du logement qui la reçoit perpendiculairement à la paroi du meuble.

La prise électrique comporte au moins :
- ) un boîtier dont le volume intérieur est délimité entre une paroi supérieure surplombant un fond inférieur du boîtier, et une paroi latérale périphérique du boîtier s'étendant verticalement entre la paroi supérieure et le fond du boîtier. Le boîtier est équipé d'organes d'appui transversal participants d'un moyen de centrage de la prise électrique perpendiculairement à sa direction verticale d'extension ;
- ) au moins un connecteur de service USB logé à l'intérieur du boîtier en étant accessible depuis l'extérieur du boîtier via au moins une ouverture que comporte la paroi supérieure du boîtier affectée au dit au moins un connecteur de service, ainsi qu'un connecteur USB d'alimentation électrique de la prise qui est logé à l'intérieur du boîtier en étant relié par câble à un convertisseur de courant. Le connecteur d'alimentation est accessible depuis l'extérieur du boîtier via une ouverture que comporte un fond du boîtier ; et
- ) un capot d'habillage de la paroi supérieure du boîtier, comportant un passage d'accès au dit au moins un connecteur de service.

Dans ce contexte, la prise électrique de l'invention est principalement reconnaissable en ce que le boîtier est centré sur la direction verticale d'extension de la prise électrique et comporte des cloisonnements intérieurs qui délimitent des colonnes d'extension verticale qui sont intégrées à au fond et à la paroi latérale du boîtier. Les colonnes délimitent dans leur volume intérieur des réserves logeant chacune un sabot, les sabots étant constitutifs des d'organes d'appui transversal. Les colonnes comportent chacune un débouché latéral vers l'extérieur du boîtier qui est ménagé à travers la paroi latérale du boîtier.

Les sabots comportent chacun un crantage ménagé à leur face avant orientée vers les débouchés latéraux des colonnes qui les logent respectivement. Les sabots sont manoeuvrables et guidés en coulissement à l'intérieur des colonnes suivant leur extension verticale, entre une station inactive des sabots escamotés à l'intérieur des réserves et une station active des sabots déplacés en surplomb du fond du boîtier en émergeant partiellement hors des réserves à travers le débouché latéral des colonnes. Les sabots sont manoeuvrables depuis l'extérieur du boîtier par des vis de manoeuvre qui leurs sont respectivement affectées et qui sont logées à l'intérieur du boîtier.

D'autres caractéristiques spécifiques d'une prise électrique conforme à l'invention, non restrictives ni limitatives au regard d'autres caractéristiques qu'elle peut comporter sont les suivantes.

Les profils transversaux des sabots et des réserves sont de formes complémentaires, les réserves étant constitutives d'un couloir de guidage des sabots qu'elles logent respectivement entre leur station inactive et leur station active. Une cloison latérale transversalement arrière des colonnes s'étendant en vis-à-vis à distance transversale de leur débouché latéral, ménage une rampe de guidage des sabots qu'elles logent respectivement entre leur station inactive et leur station active, via la face arrière des sabots qui est appliquée contre la rampe de guidage qui leur est affectée.

Les rampes de guidage, les vis de manoeuvre et les faces arrière des sabots sont inclinées par rapport à la direction verticale d'extension de la prise électrique selon une pente constante. Les rampes de guidage s'étendent depuis le fond du boîtier en étant inclinées en direction du débouché latéral des colonnes.

Les vis de manoeuvre sont logées à l'intérieur du boîtier en contrebas de sa paroi supérieure qui comporte des passages d'introduction d'un outil d'entraînement en rotation des vis de manoeuvre. Les colonnes comportent chacune une cloison supérieure d'extension transversale qui est ménagée à l'intérieur des colonnes en contrebas de la paroi supérieure du boîtier.

Les cloisons supérieures clôturent verticalement les réserves en ménageant chacune au sommet des colonnes une chambre de réception d'une tête d'entraînement et de guidage des vis de manoeuvre et de guidage des vis de manoeuvre vers les sabots auxquels les vis de manoeuvre sont respectivement en prise par vissage. Une mise en rotation des vis de manoeuvre déplace les sabots à l'intérieur des réserves entre leur station inactive et leur station active.

Les colonnes sont au moins au nombre de deux en étant ménagées deux à deux symétriquement en opposition transversale l'une de l'autre par rapport à la direction verticale d'extension de la prise. Deux colonnes disposées symétriquement en opposition transversale ménagent entre elles à l'intérieur du boîtier un espace transversalement médian de réception d'une carte électronique qui est équipée dudit au moins un connecteur de service et du connecteur d'alimentation.

La carte électronique est montée entre les colonnes à l'intérieur du dit espace transversalement médian, via des rails d'extension verticale s'étendant parallèlement à la direction verticale d'extension de la prise électrique. Les rails sont intégrés à la face interne de la paroi latérale périphérique du boîtier et sont disposés transversalement en vis-à-vis. La direction transversale en vis-à-vis des colonnes et la direction transversale en vis-à-vis des rails sont orientées perpendiculairement l'une par rapport à l'autre. Autrement dit, les colonnes et les rails sont alternativement répartis angulairement à la face interne de la paroi latérale du boîtier à 90° (quatre vingt dix degrés) autour de la direction verticale d'extension de la prise électrique. Les rails et les colonnes sont constitutifs d'organes de rigidification de la paroi latérale périphérique du boîtier.

Le fond du boîtier et la paroi supérieure du boîtier sont assemblés entre eux par vissage, via des vis de fixation qui s'étendent verticalement à l'intérieur du boîtier en traversant le fond du boîtier depuis l'extérieur de la prise. Les vis de fixation sont respectivement introduites à l'intérieur de jeux de fûts coaxiaux qui leurs sont respectivement affectés et qui s'étendent verticalement entre le fond du boîtier et la paroi supérieure du boîtier.

Chacun des jeux de fûts coaxiaux comprennent un fût de guidage intégré au fond du boîtier et un fût de fixation intégré à la paroi supérieure du boîtier. Les têtes des vis de fixation prennent appui contre la face extérieure du fond du boîtier et sont guidées via les fûts de guidage vers les fûts de fixation à l'intérieur desquels les vis de fixation sont vissées. Les jeux de fûts coaxiaux sont disposés à distance de la carte électronique et forment une armature interne de renfort du boîtier confortée par les vis de fixation ménageant des tirants entre le fond du boîtier et la paroi supérieure du boîtier.

La paroi supérieure du boîtier comporte un épaulement ménageant un organe de soutien en suspension du boîtier. Le capot est agencé en un disque évidé centré suivant la direction verticale d'extension de la prise, via son évidement qui est emboîté sur une rehausse cylindrique intégrée à la face supérieure de la paroi supérieure du boîtier. Le disque coiffe la paroi supérieure du boîtier en s'étendant en débord transversal de la périphérie de la paroi supérieure du boîtier. L'évidement du disque ménage le passage d'accès au dit au moins un connecteur de service. Ledit passage est disposé en regard de ladite au moins une ouverture que comporte la paroi supérieure du boîtier. Le disque est fixé par crochetage à la paroi supérieure du boîtier, via des organes de crochetage coopérant entre eux dont le disque et l'épaulement de la paroi supérieure du boîtier sont respectivement équipés.

Le disque est formé d'une paroi dont le bord périphérique ménage à sa base une assise du disque s'étendant suivant un plan horizontal perpendiculaire à la direction verticale d'extension de la prise. La paroi formant le disque s'étend en élévation en rehausse de son assise en comportant des flancs d'orientations concourantes qui sont inclinés l'un par rapport à l'autre inversement vers l'assise du disque. Les flancs comprennent notamment un flanc périphérique du disque ménageant son assise, qui est prolongé par un flanc central délimitant l'évidement du disque. Une nervure circulaire de rigidification du disque est ménagée à la jonction entre le flanc périphérique du disque et le flan central comportant son évidement.

Les organes de crochetage coopérant entre eux dont le disque et l'épaulement de la paroi supérieure du boîtier sont respectivement équipés, comprennent des crochets équipant le disque en étant intégrés à la nervure de rigidification du disque. Les crochets sont angulairement répartis suivant l'extension circulaire de ladite nervure et coopèrent par emboîtement réversible avec des saignées respectives qui sont ménagées en périphérie de l'épaulement de la paroi supérieure du boîtier.

Selon un procédé de montage d'une prise électrique telle qu'elle vient d'être décrite, à l'intérieur d'un logement traversant une paroi d'un meuble, notamment verticalement un plan de travail mobilier pour exemple, le procédé comprend au moins les opérations suivantes :
- ) Installer les connecteurs de service et le connecteur d'alimentation à l'intérieur du boîtier, notamment par installation de la carte électronique via les rails équipant le boîtier. Puis installer les sabots en station inactive à l'intérieur des réserves qui leur sont affectées et les vis de manoeuvre en prise par vissage via leur extrémité inférieure à l'intérieur des sabots. Puis assembler le boîtier, notamment par fixation de sa paroi supérieure au fond du boîtier, via les vis de fixation introduites à l'intérieur des jeux de fûts qui leurs sont respectivement affectés.
- ) Puis, préalablement à l'installation de la prise à l'intérieur du logement traversant, raccorder le câble équipant le convertisseur au connecteur d'alimentation, via le débouché inférieur du logement traversant ouvert à la face inférieure du plan de travail et l'ouverture que comporte à cet effet le fond du boîtier.

- ) Puis introduire verticalement le boîtier suivant la direction d'extension de la prise, à l'intérieur du logement traversant depuis son débouché supérieur ouvert à la face supérieure du plan de travail, jusqu'à la prise d'appui de la paroi supérieure du boîtier contre la face supérieure du plan de travail, notamment via l'épaulement que comporte la paroi supérieure du boîtier.
- ) Puis déplacer les sabots à l'intérieur des réserves depuis leur station inactive vers leur station active, le crantage des sabots pénétrant progressivement à l'intérieur de la masse du plan de travail jusqu'à l'obtention d'un ancrage robuste de la prise électrique à l'intérieur du logement du plan de travail qui la reçoit.

Le montage du boîtier l'intérieur du logement traversant est effectué par un monteur en l'absence de l'installation sur le boîtier dudit capot, notamment formé par le disque évidé. Ceci permet au monteur de déplacer les sabots à l'intérieur des réserves depuis leur station inactive vers leur station active, via les vis de manoeuvre qui sont accessibles par le monteur à travers les passages que comporte à cet effet la paroi supérieure du boîtier.

Le boîtier étant préalablement monté à l'intérieur du logement traversant, le procédé comporte une opération terminale de fixation dudit capot au boîtier - notamment formé du disque - en application contre la face supérieure du plan de travail. Cette opération terminale est réalisée par le monteur par crochetage du disque en périphérie de l'épaulement que comporte la paroi supérieure du boîtier. Pour ce faire le disque est fixé par le monteur à la paroi supérieure du boîtier, par introduction verticale des crochets équipant la nervure de rigidification du disque à l'intérieur des saignées que comporte à sa périphérie l'épaulement de la paroi supérieure du boîtier. Le crochetage du disque sur la paroi supérieure du boîtier est ensuite opéré par le monteur par pivotement du disque autour de la direction verticale d'extension de la prise, provoquant la mise en coopération réversible des crochets à l'intérieur des saignées.

### BREVE DESCRIPTION DES FIGURES

L'invention sera mieux comprise à la lecture de la description détaillée qui suit d'un exemple de réalisation d'une prise à ports USB conforme à l'invention, en relation avec les figures suivantes :

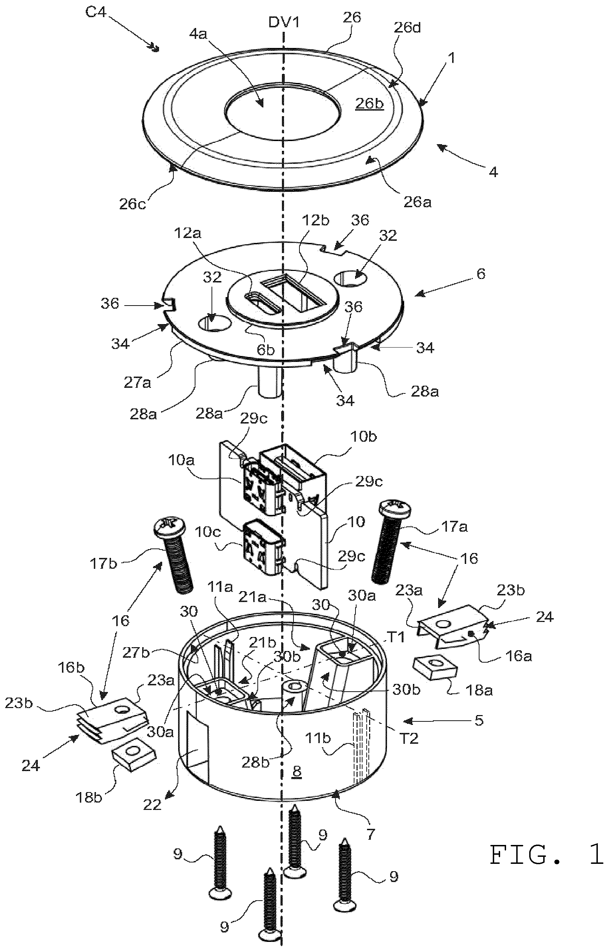

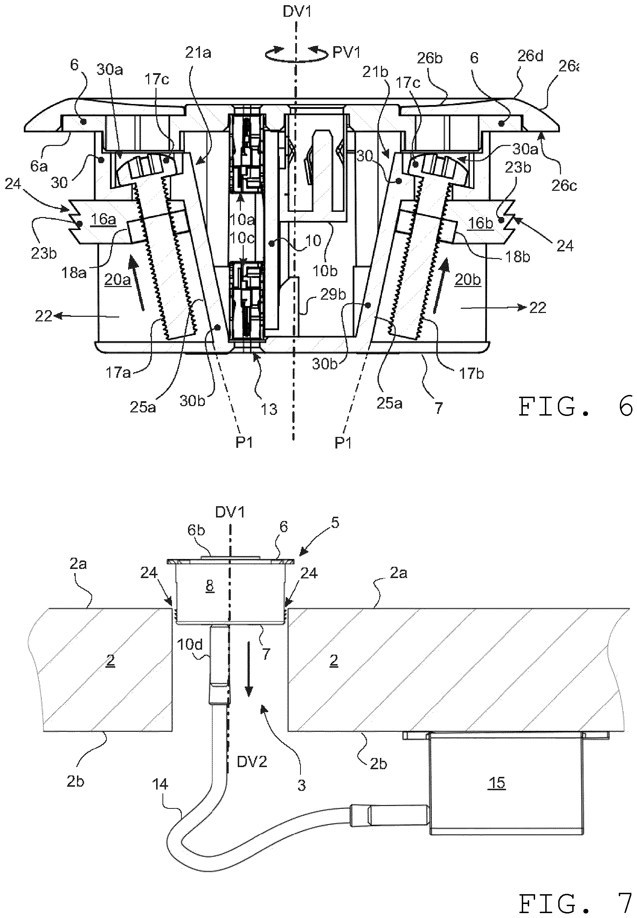

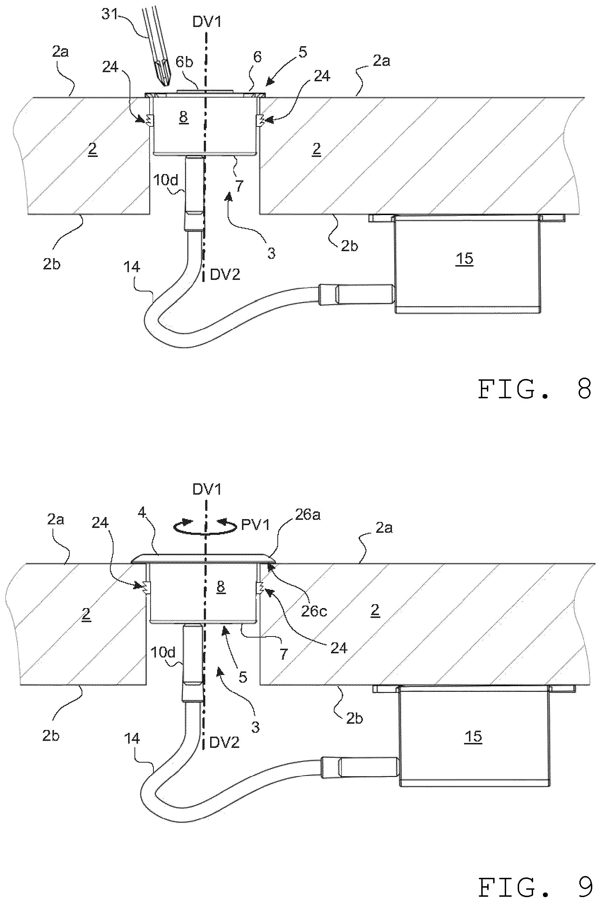

la Fig. 1 est une illustration en perspective éclatée d'une prise à ports USB conforme à l'invention, qui est agencée en équipement d'un plan de travail immobilier comme représenté sur la figure 9. La prise s'étend suivant un axe vertical d'assemblage entre eux des composants qu'elle comporte, dont essentiellement un boîtier logeant une carte électronique porteuse de connecteurs USB et un mécanisme de blocage de la prise à l'intérieur d'un logement d'un plan de travail mobilier comme successivement illustré sur les figures 7 à 9.

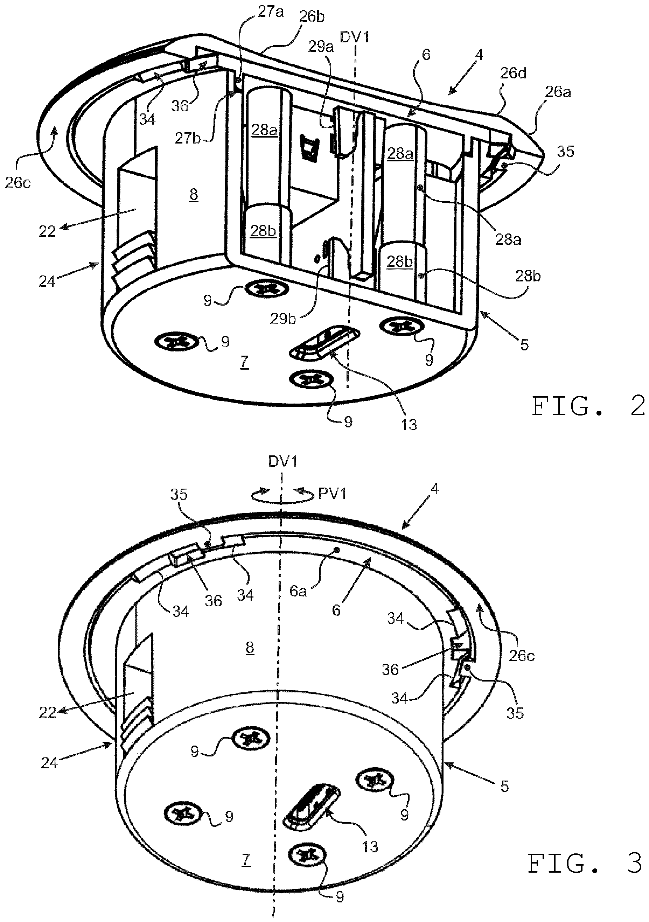

la Fig. 2 est une illustration en perspective en vue assemblée de la prise représentée sur la figure 1. La prise est représentée en écorchée suivant un plan de coupe vertical, mettant en évidence les modalités de montage de la carte électronique installée à l'intérieur du boîtier, ainsi que des modalités de fixation par vissage entre un fond du boîtier et une paroi supérieure du boîtier.
la Fig. 3 est une illustration en perspective de dessous et en vue assemblée de la prise représentée sur les figures 1 et 2. Sur la figure 3 - comme aussi illustré sur la figure 2 - le mécanisme de blocage est représenté en station inactive. En station inactive du mécanisme de blocage, des organes d'ancrage placés en station inactive sont chacun escamotés en quasi-totalité à l'intérieur de réserves respectives qui sont ménagées à l'intérieur du boîtier, pour permettre l'introduction du boîtier à l'intérieur d'un logement que comporte le plan de travail comme illustré sur la figure 7.

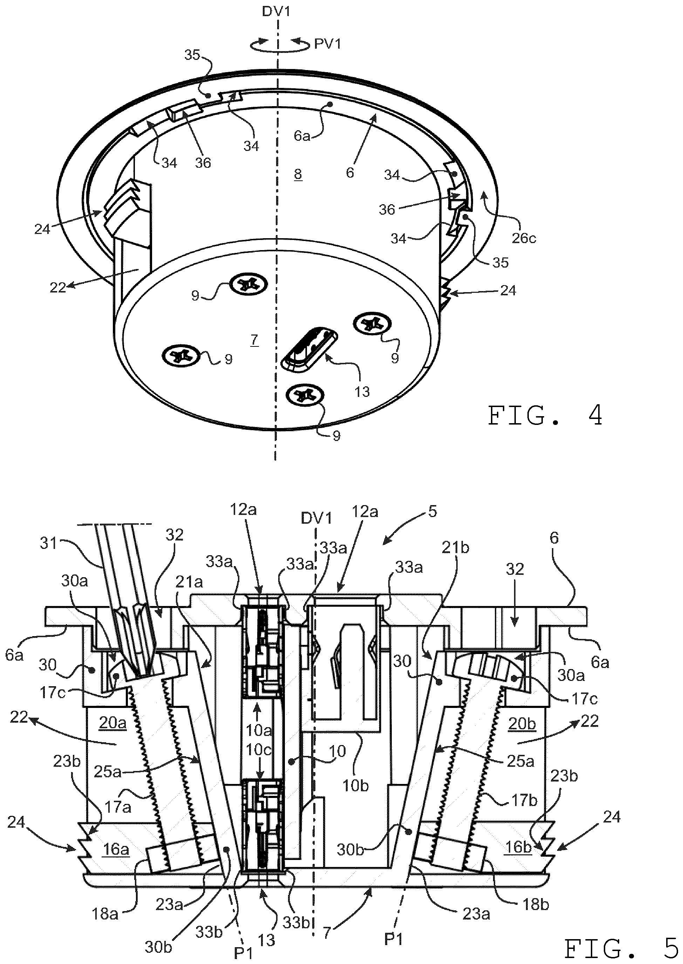

la Fig. 4 est une illustration en perspective de dessous et en vue assemblée de la prise représentée sur les figures 1 à 3. Sur la figure 4, le mécanisme de blocage est représenté en station active selon laquelle les organes d'ancrage placés en station active émergent hors des réserves ménagées à l'intérieur du boîtier, pour permettre un blocage du boîtier à l'intérieur du logement que comporte le plan de travail comme illustré sur les figures 8 et 9.
la Fig. 5 est une représentation en coupe suivant un plan vertical du boîtier illustré sur les figures 1 à 4. Le mécanisme de blocage est représenté en station inactive, préalablement à son passage en station active comme illustré sur la figure 6. Les organes d'ancrage sont manoeuvrables par un opérateur depuis l'extérieur du boîtier entre leur station active et leur station inactive, via un outil d'entraînement en rotation de vis de manoeuvre installées à l'intérieur du boîtier.
la Fig. 6 est une illustration en coupe suivant un plan vertical de la prise représentée sur les figures 1 à 5. Le mécanisme de blocage est représenté en station active par suite d'une manoeuvre des organes d'ancrage en station active via les vis de manoeuvre, comme illustrées sur les figures 5 et 6. Sur la figure 6, le mécanisme de blocage est en station active et l'outil est retiré hors du boîtier par l'opérateur. Un capot amovible agencé en disque est fixé par l'opérateur à la paroi supérieure du boîtier comme illustré sur la figure 9.
la Fig. 7 est une représentation schématique en coupe suivant un plan vertical, d'un plan de travail mobilier comportant un logement traversant d'installation de la prise illustrée sur les figures 1 à 6. La figure 7 illustre une première étape d'un procédé de montage de la prise à l'intérieur du logement traversant, le boîtier préassemblé que comporte la prise étant introduit à l'intérieur du logement traversant depuis la face supérieure du plan de travail et est raccordé au convertisseur de courant.
la Fig. 8 est une représentation schématique en coupe suivant un plan vertical du plan de travail illustré sur la figure 7, le boîtier étant installé ancré à l'intérieur du logement traversant qu'il comporte. La figure 8 illustre une deuxième étape du procédé de montage de la prise à l'intérieur du logement traversant, selon laquelle le mécanisme de blocage est en station active d'immobilisation par ancrage ferme du boîtier à l'intérieur du plan de travail via les organes d'ancrage.
la Fig. 9 est une représentation schématique en coupe suivant un plan vertical du plan de travail illustré sur les figures 7 et 8. Le boîtier étant installé et ancré à l'intérieur du logement traversant qui le reçoit, la figure 9 illustre une troisième étape du procédé de montage de la prise à l'intérieur du logement traversant. Selon cette troisième étape, le capot que comporte la prise est assemblé au boîtier en application contre la face supérieure du plan de travail.

### DESCRIPTION DETAILLEE DE L'INVENTION

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite.

Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

Sur la figure 1, une prise 1 électrique à ports USB est configurée en un équipement d'un plan de travail 2 mobilier illustré sur les figures 7 à 9. La prise 1 s'étend depuis son sommet vers sa base suivant une direction verticale DV1, en corrélation avec une direction verticale DV2 d'extension d'un logement 3 traversant que comporte le plan de travail 2, comme illustré sur les figures 7 à 9.

Depuis son sommet vers sa base, la prise 1 comporte un capot C4 agencé en un disque 4 évidé 4a, et un boîtier 5 agencé en une enceinte logeant une carte électronique 10 sur laquelle sont installés des connecteurs 10a, 10b, 10c du type à ports USB. Les connecteurs 10a, 10b, 10c comprennent deux connecteurs de service 10a, 10b et un connecteur d'alimentation 10c de la prise 1 en énergie électrique. Selon l'exemple illustré, les connecteurs de service 10a, 10b comprennent un connecteur 10a du type USB-C et un connecteur 10b du type USB-A. Le connecteur d'alimentation 10c est de préférence du type USB-C.

Suivant la direction verticale DV1 d'extension de la prise 1, le boîtier 5 intègre à sa base un fond 7 d'obturation de son volume intérieur, qui est rehaussé d'une paroi latérale 8 périphérique. La paroi latérale 8 du boîtier 5 s'étend verticalement autour de la direction verticale DV1 de la prise 1 depuis le fond 7 du boîtier 5 auquel elle est intégrée. Une paroi supérieure 6 du boîtier 5 clôture l'enceinte délimitée par la paroi latérale 8 périphérique du boîtier 5. Les connecteurs de service 10a, 10b sont accessibles depuis l'extérieur de la prise 1, pour permettre à un utilisateur de connecter un appareil électronique à la carte électronique 10 via l'un ou l'autre des connecteurs de service 10a, 10b. La paroi supérieure 6 du boîtier 5 comporte à cet effet des ouvertures 12a, 12b qui sont ménagées verticalement à son travers et qui sont individuellement accessibles par l'utilisateur depuis la face supérieure 2a du plan de travail 2, à travers l'évidement 4a du disque 4.

Visible sur les figures 2 à 4, le fond 7 du boîtier 5 comporte verticalement à son travers une ouverture 13 pour permettre le raccordement - via un câble 14 électrique - du connecteur d'alimentation 10c à un convertisseur 15 de courant électrique distant de la prise 1 comme illustré sur les figures 7 à 9. Sur les figures 7 à 9, le convertisseur 15 est installé pour exemple sur le meuble à distance de la prise 1, sous le plan de travail 2 à sa face inférieure 2b.

La paroi supérieure 6 du boîtier 5 est montée amovible sur la paroi latérale 8 du boîtier 5, pour permettre un accès au volume intérieur du boîtier 5. Le montage amovible de la paroi supérieure 6 du boîtier 5 permet d'installer à l'intérieur de l'enceinte des composants fonctionnels de la prise 1 - tels que notamment la carte électronique 10 et un mécanisme de blocage 16 de la prise 1 à l'intérieur du plan de travail 2 tel que décrit par la suite - et/ou permet inversement d'effectuer une opération de maintenance de la prise 1.

A cet effet sur la figure 1 et plus visible sur la figure 2, la paroi supérieure 6 du boîtier 5 est solidairement assemblée de manière réversible au fond 7 du boîtier 5 par vissage. La paroi supérieure 6 du boîtier 5 comporte une nervure d'emboîtement 27a à l'intérieur d'une feuillure 27b que comporte la paroi latérale 8 du boîtier 5 à son débouché verticalement opposé au fond 7 du boîtier 5. La paroi supérieure 6 du boîtier 5 est ainsi positionnée sur la paroi latérale 8 du boîtier 5, préalablement à sa fixation par vissage au fond 7 du boîtier 5.

Pour sa fixation au fond 7 du boîtier 5, la paroi supérieure 6 du boîtier 5 et le fond 7 du boîtier 5 intègrent chacun plusieurs jeux - au nombre de quatre selon l'exemple illustré - de deux fûts 28a, 28b coaxiaux d'extension verticale, via lesquels la paroi supérieure 6 du boîtier 5 est fixée par vissage au fond 7 du boîtier 5. Les fûts 28a, 28b coaxiaux s'étendent à l'intérieur du boîtier 5 entre la face inférieure de la paroi supérieure 6 du boîtier 5 et la face supérieure - ou autrement dit intérieure - du fond 7 du boîtier 5. Les fûts 28a, 28b d'un même jeu comprennent des fûts de guidage 28b et des fûts de fixation 28a qui sont respectivement intégrés au fond 7 du boîtier 5 et à sa paroi supérieure 6.

Les fûts de guidage 28b sont constitutifs de guides d'introduction à l'intérieur du boîtier 5 de vis de fixation 9 qui leur sont respectivement affectées et qui sont introduites verticalement depuis l'extérieur du boîtier 5 en traversant son fond 7, comme représenté sur les figures 2 à 4. Sur la figure 2, les vis de fixation 9 sont introduites à l'intérieur des fûts de guidage 28b qui les guident vers l'intérieur des fûts de fixation 28a, à l'intérieur desquels les vis de fixation 9 sont vissées jusqu'à l'obtention d'un plaquage vertical ferme de la paroi supérieure 6 du boîtier 5 contre la tranche supérieure de la paroi latérale 8 périphérique du boîtier 5.

Sur la figure 1 et sur les figures 5 et 6, le boîtier 5 loge aussi le mécanisme de blocage 16 de la prise 1 à l'intérieur du logement 3 que comporte le plan de travail 2 comme illustré sur les figures 8 et 9. Le mécanisme de blocage 16 comporte des sabots 16a, 16b munis d'écrous 18a, 18b, les sabots 16a, 16b étant montés mobiles à l'intérieur du boîtier 5 via des vis de manoeuvre 17a, 17b. Les sabots 16a, 16b et les vis de manoeuvre 17a, 17b sont logés à l'intérieur du boîtier 5, comme illustré sur les figures 5 et 6. Les sabots 16a, 16b sont plus spécifiquement logés à l'intérieur de réserves 20a, 20b qui sont ménagées par le volume intérieur de colonnes 21a, 21b d'extension verticale qui sont disposées transversalement en vis-à-vis symétriquement par rapport à la direction verticale DV1 d'extension de la prise 1.

Les colonnes 21a, 21b sont ménagées par un cloisonnement intérieur du boîtier 5 de protection de la carte électronique 10 équipée des connecteurs 10a, 10b, 10c. La carte électronique 10 est installée verticalement suivant son plan d'extension à l'intérieur du boîtier 5, en étant disposée dans un espace transversal ménagé entre les colonnes 21a, 21b. Les colonnes 21a, 21b sont intégrées à la paroi latérale 8 et au fond 7 du boîtier 5, et présentent chacune un débouché 22 latéral vers l'extérieur du boîtier 5 pour permettre l'émergence des sabots 16a, 16b hors des réserves 20a, 20b par suite de leur déplacement par les vis de manoeuvre 17a, 17b à l'intérieur des colonnes 21a, 21b. Suivant leur extension transversale, les sabots 16a, 16b sont guidés en mobilité à l'intérieur des colonnes 21a, 21b via leur face arrière 23a, et comportent chacun un crantage 24 ménagé à leur face avant 23b transversalement opposée à leur face arrière 23a, les crantages 24 étant orientés émergeant hors des débouchés 22 latéral des colonnes 21a, 21b.

Sur la figure 1 et détaillé sur les figures 5 et 6, les sabots 16a, 16b sont logés à l'intérieur des réserves 20a, 20b qui leurs sont affectées. Les sabots 16a, 16b et les réserves 20a, 20b présentent des profils transversaux de formes complémentaires, les réserves 20a, 20b ménageant des couloirs de guidage des sabots 16a, 16b à l'intérieur des colonnes 21a, 21b. Les sabots 16a, 16b sont guidés verticalement à l'intérieur des colonnes 21a, 21b, par prise d'appui contre des rampes de guidage 25a qui leurs sont affectées.

Les rampes de guidage 25a sont ménagées par des cloisons latérales 30b arrière respectives des colonnes 21a, 21b, qui s'étendent en vis à vis du débouché 22 latéral des réserves 20a, 20b vers l'extérieur du boîtier 5. Les rampes de guidage 25a et la face arrière 23a des sabots 16a, 16b sont inclinées par rapport à la direction verticale DV1 d'extension de la prise 1 électrique, selon une pente P1 constante inclinée depuis le fond 7 du boîtier 5 en direction du sommet du débouché 22 latéral des réserves 20a, 20b.

Les vis de manoeuvre 17a, 17b sont installées à l'intérieur du boîtier 5 en contrebas de la paroi supérieure 6 du boîtier 5 et en étant inclinées parallèlement aux rampes de guidage 25a respectivement affectées aux sabots 16a, 16b. Plus particulièrement, les réserves 20a, 20b sont chacune clôturées à leur sommet par une cloison supérieure 30 des colonnes 21a, 21b d'extension transversale, qui s'étend en surplomb du fond 7 du boîtier 5. Les cloisons supérieures 30 des colonnes 21a, 21b ménagent chacune au sommet des colonnes 21a, 21b une chambre 30a logeant une tête d'entraînement 17c des vis de manoeuvre 17a, 17b.

Les cloisons supérieures 30 des colonnes 21a, 21b sont inclinées perpendiculairement à la pente P1, en guidant les vis de manoeuvre 17a, 17b suivant ladite pente P1 vers les sabots 16a, 16b, à travers un conduit 30c que comporte chacune des cloisons supérieures 30 des colonnes 21a, 21b. Les vis de manoeuvre 17a, 17b s'étendent à l'intérieur des colonnes 21a, 21b suivant ladite pente P1, jusqu'aux sabots 16a, 16b à l'intérieur desquels les vis de manoeuvre 17a, 17b sont vissées suivant ladite pente P1. La paroi supérieure 6 du boîtier 5 comporte des passages 32 via lesquels un opérateur peut introduire à l'intérieur des colonnes 21a, 21b un outil 31 d'entraînement en rotation des vis de manoeuvre 17a, 17b. Les sabots 16a, 16b peuvent être ainsi manoeuvrés par l'opérateur depuis leur position inactive vers leur position active et inversement, postérieurement à l'assemblage du boîtier 5 par fixation de sa paroi supérieure 6 à son fond 7.

Sur la figure 5, le mécanisme de blocage 16 est en station inactive. Les sabots 16a, 16b sont escamotés en station inactive à l'intérieur des réserves 20a, 20b, en application contre le fond 7 du boîtier 5.

De préférence, en station inactive des sabots 16a, 16b, le crantage 24 qu'ils comportent peut plus ou moins émerger hors des réserves 20a, 20b, étant compris sous condition de ne pas faire obstacle à l'introduction de la prise 1 à l'intérieur du logement 3 du plan de travail 2 qui la reçoit comme illustré sur la figure 7. Ceci permet de limiter la course des sabots 16a, 16b à l'intérieur des colonnes 21a, 21b entre leur station inactive et leur station active - et par suite de limiter l'encombrement transversal et vertical ainsi que la masse de la prise 1.

Sur la figure 6, le mécanisme de blocage 16 est en station active. Les sabots 16a, 16b appliqués contre la rampe de guidage 25a qui leur est affectée sont progressivement déplacés par un opérateur depuis leur station inactive vers leur station active via les vis de manoeuvre 17a, 17b. En station active, les sabots 16a, 16b sont placés à proximité de - voire au plus comme illustré en butée contre - la cloison supérieure 30 des colonnes 21a, 21b. En station active, les crantages 24 que comportent respectivement les sabots 16a, 16b émergent hors des réserves 20a, 20b.

Les crantages 24 des sabots 16a, 16b pénètrent dans la masse du plan de travail 2 pour bloquer la prise 1 à l'intérieur du logement 3 qui la reçoit, par serrage vertical du boîtier 5 entre les sabots 16a, 16b qui sont ancrés dans la masse du plan de travail 2, et la paroi supérieure 6 du boîtier 5 qui prend appui contre la face supérieure 2a du plan de travail 2 comme illustré sur la figure 8. Le boîtier 5 étant ancré à l'intérieur du plan de travail 2, l'opérateur peut installer le disque 4 sur le boîtier 5.

Par ailleurs sur la figure 1, la carte électronique 10 est installée verticalement suivant son plan d'extension à l'intérieur du boîtier 5, via des rails 11a, 11b qui sont disposés transversalement T2 en vis-à-vis et qui sont intégrés à la paroi latérale 8 du boîtier 5. Sur la figure 1, il est à relever que la direction transversale T1 d'orientation en vis-à-vis des colonnes 21a, 21b l'une vers l'autre et la direction transversale T2 d'orientation en vis-à-vis des rails 11a, 11b l'un vers l'autre, sont perpendiculaires entre elles.

Les colonnes 21a, 21b et les rails 11a, 11b intégrés à la paroi latérale 8 du boîtier 5 sont orientés verticalement parallèlement entre eux, en étant angulairement répartis à 90° en alternance à l'intérieur du boîtier 5. Les colonnes 21a, 21b et les rails 11a, 11b, ainsi que le fond 7 et la paroi latérale 8 du boîtier 5, sont intégrés en un même corps, tel que par moulage ou par scellement par exemple.

Les colonnes 21a, 21b et les rails 11a, 11b sont ainsi constitutifs d'organes de rigidification de la paroi latérale 8 du boîtier 5, en ménagent collectivement une armature de renfort du boîtier 5. La robustesse du boîtier 5 en est accrue, en complément de son renfort par assemblage vertical entre la paroi supérieure 6 du boîtier 5 et le fond 7 du boîtier 5, via le jeu de vis de fixation 9 coopérant avec un filetage intérieur des fûts 28a de fixation intégrés à la paroi supérieure 6 du boîtier 5 qui leurs sont affectés.

Par ailleurs sur la figure 2, la carte électronique 10 est installée à l'intérieur du boîtier 5 via les rails 11a, 11b comme illustré sur la figure 1, en étant maintenue en position stable suivant son plan d'extension par des taquets 29a, 29b. Deux taquets supérieurs 29a sont intégrés à la paroi supérieure 6 du boîtier 5 et deux taquets inférieurs 29b sont intégrés au fond 7 du boîtier 5, un seul des taquets supérieurs 29a et un seul des taquets inférieurs 29b étant visibles sur la figure 2. Les taquets supérieurs 29a et les taquets inférieurs 29b sont disposés à distance transversale en zone médiane des bords respectivement supérieur et inférieur de la carte électronique 10, transversalement de part et d'autre des connecteurs 10a, 10b, 10c.

Sur la figure 1, les taquets supérieurs 29a et les taquets inférieurs 29b sont emboîtés sur la carte électronique 10 via des encoches 29c qu'elle comporte en zone médiane de ses bords respectivement supérieur et inférieur. La profondeur des encoches 29c et/ou le positionnement vertical de la paroi supérieure 6 du boîtier 5 par emboîtement vertical de la nervure d'emboîtement 27a à l'intérieur de la feuillure 27b sont calibrés en interdisant une mise sous contrainte verticale de la carte électronique 10, par suite de la fixation par vissage de la paroi supérieure 6 du boîtier 5 depuis le fond 7 du boîtier 5.

Sur les figures 5 et 6, la paroi supérieure 6 du boîtier 5 et son fond 7 comportent en outre des épaulements 33a, 33b intérieurs qui sont ménagés en bordure des ouvertures 12a, 12b et 13 d'accès aux connecteurs de service 10a, 10b et au connecteur d'alimentation 10c. Lesdits épaulements 33a, 33b intérieurs sont ainsi disposés de part et d'autre de la tranche supérieure et de la tranche inférieure de la carte électronique 10.

Les taquets 29a, 29b et lesdits épaulements 33a, 33b intérieurs, qui s'étendent en bordure des connecteurs 10a, 10b, 10c, confortent le maintien de la carte électronique 10 à l'intérieur du boîtier 5 en station stable suivant son plan d'extension. La carte électronique 10 est ainsi maintenue entre les taquets 29a, 29b et les épaulement 33a, 33b, en station stable suivant son plan d'extension orienté verticalement à l'intérieur du boîtier 5, et cela sans induire une mise sous contrainte ni un risque de détérioration de la carte électronique 10.

Sur la figure 1, le disque 4 est centré sur la paroi supérieure 6 du boîtier 5 par emboîtement glissant de son évidement 4a autour d'une rehausse cylindrique 6b intégrée à la face supérieure de la paroi supérieure 6 du boîtier 5. Suite à son centrage sur la paroi supérieure 6 du boîtier 5, le disque 4 est fixé à la paroi supérieure 6 du boîtier 5 par crochetage. Le disque 4 forme un masque de couverture de la paroi supérieure 6 du boîtier 5, l'évidement 4a du disque 4 procurant un accès aux connecteurs de service 10a, 10b via les ouvertures 12a, 12b que comporte la paroi supérieure 6 du boîtier 5.

Le disque 4 est conformé en assiette, en étant formé d'une paroi 26 comportant deux flancs 26a, 26b consécutifs qui sont inversement inclinés par rapport à la direction verticale DV1 d'extension de la prise 1. En station d'installation sur le plan de travail 2, un flanc périphérique 26a du disque 4 ménage à sa périphérie une assise 26c du disque 4 en application contre la face supérieure 2a du plan de travail 2, comme illustré sur la figure 9. Le flanc périphérique 26a s'élève en élévation en étant incliné vers le centre du disque 4, jusqu'à une zone d'inflexion de la paroi 26 du disque 4 qui ménage un flanc central 26b du disque 4.

Le flanc central 26b du disque 4 est inversement incliné par rapport au flanc périphérique 26a, en étant en outre progressivement incurvé vers le centre du disque 4. Le flanc central 26b comporte l'évidement 4a du disque 4 ménageant le passage d'accès aux connecteurs de service 10a, 10b via les ouvertures 12a, 12b que comporte à cet effet la paroi supérieure 6 du boîtier 5. Les inclinaisons des flancs 26a, 26b l'un par rapport à l'autre étant concourantes, une nervure 26d circulaire de rigidification du disque 4 est ménagée dans la zone de jonction des flancs 26a, 26b entre eux. La nervure 26d circulaire est exploitée pour fixer le disque 4 à la paroi supérieure 6 du boîtier 5 par crochetage, comme illustré sur les figures 3 et 4.

Sur la figure 1 et les figures 3 et 4, la paroi supérieure 6 du boîtier 5 comporte un épaulement périphérique 6a de prise d'appui du boîtier 5 contre la face supérieure 2a du plan de travail 2 lors de son introduction à l'intérieur du logement 3 que comporte le plan de travail 2 comme illustré sur la figure 7. L'épaulement périphérique 6a de la paroi supérieure 6 du boîtier 5 comporte une pluralité de saignées 34 qui sont angulairement réparties en s'étendant suivant sa circonférence.

La nervure 26d que comporte le disque 4 est munie de crochets 35 qui sont angulairement répartis suivant la circonférence de la nervure 26d du disque 4. Le disque 4 est assemblé à l'épaulement périphérique 6a de la paroi supérieure 6 du boîtier 5, par introduction des crochets 35 à l'intérieur de dégagements 36 des saignées 34 qui leurs sont respectivement affectées, puis par pivotement PV1 réversible du disque 4 autour de la direction verticale DV1 d'extension de la prise 1 provoquant l'introduction des crochets 35 à l'intérieur des saignées 34. Il est à relever qu'un plan de travail 2 est souvent encombré et/ou qu'un geste vif peut être latéralement ou verticalement appliqué négligemment par un individu. Pour éviter qu'un heurt modéré ne provoque une altération du disque 4 et/ou sa séparation du boîtier 5, le disque 4 est renforcé par la nervure 26d qu'il comporte et est assemblé fermement au boîtier 5 par mise en coopération entre les crochets 35 intégrés à la nervure 26d du disque 4 et les saignées 34 que comporte la paroi supérieure 6 du boîtier 5.

Sur les figures 7 à 9, les étapes d'installation de la prise 1 à l'intérieur du logement 3 d'extension verticale DV2 que comporte le plan de travail 2 sont successivement illustrées. Tel que précédemment mentionné, le convertisseur 15 est installé à distance du logement 3, en étant par exemple fixé sous le plan de travail 2 du meuble à sa face inférieure 2b. Sur la figure 7, le boîtier 5 est électriquement connecté au convertisseur 15 préalablement à son introduction à l'intérieur du logement 3. Le câble 14 - équipant fixement et/ou connecté amovible au convertisseur 15 - est introduit à l'intérieur du logement 3 à travers son débouché ouvert à la face inférieure 2b du plan de travail 2. Le câble 14 comporte un connecteur 10d USB qui est emboîté par le monteur au connecteur d'alimentation 10c logé à l'intérieur du boîtier 5 en étant accessible à travers l'ouverture 13 que comporte le fond 7 du boîtier 5.

Puis, sur la figure 8, le monteur introduit le boîtier 5 à l'intérieur du logement 3 - depuis son débouché ouvert à la face supérieure 2a du plan de travail 2 - jusqu'à l'application de l'épaulement 6a de la paroi supérieure 6 du boîtier 5 contre la face supérieure 2a du plan de travail 2. Le monteur déplace les sabots 16a, 16b à l'intérieur des colonnes 21a, 21b depuis leur station inactive vers leur station active, via l'outil 31 d'entraînement en rotation des vis de manoeuvre 17a, 17b, tel que selon l'exemple illustré un tournevis cruciforme dont la pointe est représentée. Les crantages 24 que comportent les sabots 16a, 16b émergent hors des réserves 20a, 20b en pénétrant transversalement dans la masse de la paroi 2c du plan de travail 2 délimitant le logement 3, pour provoquer l'ancrage de la prise 1 à l'intérieur du plan de travail 2.

Puis, sur la figure 9, le monteur installe le disque 4 sur le boîtier 5 par crochetage, à partir d'un pivotement PV1 réversible du disque 4 autour de la direction verticale DV1 d'extension de la prise 1. Le disque 4 masque alors la paroi supérieure 6 du boîtier 5 depuis son épaulement 6a vers la rehausse cylindrique 6b. L'évidement 4a du disque 4 autorise un accès aux ouvertures 12a, 12b ménagées à travers la paroi supérieure 6 du boîtier 5, ce qui permet à un utilisateur de la prise 1 d'accéder aux connecteurs de service 10a, 10b pour connecter un ou plusieurs appareils électroniques.

On notera que bien qu'il soit précédemment décrit et représenté une prise électrique de l'invention installée sur un plan de travail mobilier, l'invention est bien entendu par transposition applicable à une telle prise électrique installée sur une quelconque paroi d'un meuble, telle qu'une joue d'un meuble par exemple - ou autrement dit une paroi latérale du meuble - ou par exemple encore une cloison intérieure du meuble.

## Revendications

1. Prise (1) électrique à ports USB d'équipement d'une paroi d'un meuble, tel qu'un plan de travail (2) mobilier, à l'intérieur d'un logement (3) traversant qu'elle comporte, la prise (1) électrique s'étendant suivant une direction verticale (DV1) et comportant au moins :
- )un boîtier (5) dont le volume intérieur est délimité entre une paroi supérieure (6) surplombant un fond (7) inférieur du boîtier (5), et une paroi latérale (8) périphérique du boîtier (5) s'étendant verticalement entre la paroi supérieure (6) et le fond (7) du boîtier (5), le boîtier (5) étant équipé d'organes d'appui transversal participants d'un moyen de centrage de la prise (1) électrique perpendiculairement à sa direction verticale (DV1) d'extension,
- ) au moins un connecteur de service (10a, 10b) USB logé à l'intérieur du boîtier (5) en étant accessible depuis l'extérieur du boîtier (5) via au moins une ouverture (12a, 12b) que comporte la paroi supérieure (6) du boîtier (5) affectée au dit au moins un connecteur de service (10a, 10), ainsi qu'un connecteur USB d'alimentation (10c) électrique de la prise (1) qui est logé à l'intérieur du boîtier (5) en étant apte à être relié par câble (14) à un convertisseur (15) de courant, le connecteur d'alimentation (10c) étant accessible depuis l'extérieur du boîtier (5) via une ouverture (13) que comporte un fond (7) du boîtier (5), et
- ) un capot (C4) d'habillage de la paroi supérieure (6) du boîtier (5), comportant un passage (4a) d'accès au dit au moins un connecteur de service (10a, 10b), **caractérisée :**
**en ce que** le boîtier (5) est centré sur la direction verticale (DV1) d'extension de la prise (1) électrique et comporte des cloisonnements intérieurs qui délimitent des colonnes (21a, 21b) d'extension verticale qui sont intégrées au fond (7) et à la paroi latérale (8) du boîtier (5), les colonnes (21a, 21b) délimitant dans leur volume intérieur des réserves (20a, 20b) logeant chacune un sabot (16a, 16b), les sabots (16a, 16b) étant constitutifs des dits organes d'appui transversal, les colonnes (21a, 21b) comportant chacune un débouché latéral (22) vers l'extérieur du boîtier (5) qui est ménagé à travers la paroi latérale (8) du boîtier (5),
**en ce que** les sabots (16a, 16b) comportent chacun un crantage (24) ménagé à leur face avant (23b) orientée vers les débouchés latéraux (22) des colonnes (21a, 21b) qui les logent respectivement, les sabots (16a, 16b) étant manoeuvrables et guidés en coulissement à l'intérieur des colonnes (21a, 21b) suivant leur extension verticale, entre une station inactive des sabots (16a, 16b) escamotés à l'intérieur des réserves (20a, 20b) et une station active des sabots (16a, 16b) déplacés en surplomb du fond (7) du boîtier (5) en émergeant partiellement hors des réserves (20a,20b) à travers le débouché latéral (22) des colonnes (21a, 21b), les sabots (16a, 16b) étant manoeuvrables depuis l'extérieur du boîtier (5) par des vis de manoeuvre (17a, 17b) qui leurs sont respectivement affectées et qui sont logées à l'intérieur du boîtier (5)
**en ce que** le fond du boîtier et la paroi supérieure (6) du boîtier (5) sont assemblés entre eux par vissage, via des vis de fixation qui s'étendent verticalement à l'intérieur du boîtier (5) en traversant le fond du boîtier (5) depuis l'extérieur de la prise (1), les vis de fixation étant respectivement introduites à l'intérieur de jeux de fûts coaxiaux qui leurs sont respectivement affectés et qui s'étendent verticalement entre le fond du boîtier (5) et la paroi supérieure (6) du boîtier (5).

2. Prise (1) électrique selon la revendication 1, **caractérisée en ce que** les profils transversaux des sabots (16a, 16b) et des réserves (20a, 20b) sont de formes complémentaires, les réserves (20a, 20b) étant constitutives d'un couloir de guidage des sabots (16a, 16b) qu'elles logent respectivement entre leur station inactive et leur station active,
**en ce qu'**une cloison latérale (30b) transversalement arrière des colonnes (21a, 21b) s'étendant en vis-à-vis à distance transversale de leur débouché latéral, (22), ménage une rampe de guidage (25a) des sabots (16a, 16b) qu'elles logent respectivement entre leur station inactive et leur station active via la face arrière (23a) des sabots (16a, 16b) qui est appliquée contre la rampe de guidage (25a) qui leur est affectée, et
**en ce que** les rampes de guidage (25a), les vis de manoeuvre (17a, 17b) et les faces arrière des sabots (16a, 16b) sont inclinées par rapport à la direction verticale (DV1) d'extension de la prise (1) électrique selon une pente (P1) constante, les rampes de guidage (25a) s'étendant depuis le fond (7) du boîtier (5) en étant inclinées en direction du débouché latéral (22) des colonnes (21a, 21b).

3. Prise (1) électrique selon l'une quelconque des revendications 1 et 2, **caractérisée en ce que** les vis de manoeuvre (17a, 17b) sont logées à l'intérieur du boîtier (5) en contrebas de sa paroi supérieure (6) qui comporte des passages (32) d'introduction d'un outil (31) d'entraînement en rotation des vis de manoeuvre (17a, 17b), et **en ce que** les colonnes (21a, 21b) comportent chacune une cloison supérieure (30) d'extension transversale qui est ménagée à l'intérieur des colonnes (21a, 21b) en contrebas de la paroi supérieure (6) du boîtier (5), les cloisons supérieures (30) clôturant verticalement les réserves (20a, 20b) en ménageant chacune au sommet des colonnes (21a, 21b) une chambre (30a) de réception d'une tête d'entraînement (17d) et de guidage des vis de manoeuvre (17a, 17b) vers les sabots (16a, 16b) auxquels les vis de manoeuvre (17a, 17b) sont respectivement en prise par vissage, une mise en rotation des vis de manoeuvre (17a, 17b) déplaçant les sabots (16a, 16b) à l'intérieur des réserves (20a, 20b) entre leur station inactive et leur station active.

4. Prise (1) électrique selon l'une quelconque des revendications 1 à 3, **caractérisée en ce que** les colonnes (21a, 21b) sont au moins au nombre de deux en étant ménagées deux à deux symétriquement en opposition transversale l'une de l'autre par rapport à la direction verticale (DV1) d'extension de la prise (1), deux colonnes (21a, 21b) disposées symétriquement en opposition transversale ménageant entre elles à l'intérieur du boîtier (5) un espace transversalement médian de réception d'une carte électronique (10) qui est équipée dudit au moins un connecteur de service (10a, 10b) et du connecteur d'alimentation (10c).

5. Prise (1) électrique selon la revendication 4, **caractérisée en ce que** la carte électronique (10) est montée entre les colonnes (21a, 21b) à l'intérieur dudit espace transversalement médian via des rails (11a, 11b) d'extension verticale s'étendant parallèlement à la direction verticale (DV1) d'extension de la prise (1) électrique en étant intégrés à la face interne de la paroi latérale (8) périphérique du boîtier (5) et disposés transversalement en vis-à-vis, la direction transversale (T1) en vis-à-vis des colonnes (21a, 21b) et la direction transversale (T2) en vis-à-vis des rails (11a, 11b) étant orientées perpendiculairement l'une par rapport à l'autre, les colonnes (21a,21b) et les rails (11a,11b) étant alternativement répartis angulairement à la face interne de la paroi latérale (8) du boîtier (5) à 90° autour de la direction verticale (DV1) d'extension de la prise (1) électrique.

6. Prise (1) électrique selon la revendication 5, **caractérisée en ce que** les rails (11a, 11b) et les colonnes (21a, 21b) sont constitutifs d'organes de rigidification de la paroi latérale (8) périphérique du boîtier (5).

7. Prise (1) électrique selon l'une quelconque des revendications 1 à 6, **caractérisée en ce que** chacun des jeux de fûts coaxiaux comprennent un fût de guidage intégré au fond du boîtier (5) et un fût de fixation intégré à la paroi supérieure (6) du boîtier (5), les têtes des vis de fixation prenant appui contre la face extérieure du fond du boîtier (5) et étant guidées via les fûts de guidage vers les fûts de fixation à l'intérieur desquels les vis de fixation sont vissées, et **en ce que** les jeux de fûts coaxiaux sont disposés à distance de la carte électronique (10) et forment une armature interne de renfort du boîtier (5) confortée par les vis de fixation ménageant des tirants entre le fond du boîtier (5) et la paroi supérieure (6) du boîtier (5).

8. Prise (1) électrique selon l'une quelconque des revendications 1 à 7, **caractérisée en ce que** la paroi supérieure (6) du boîtier (5) comporte un épaulement (6a) ménageant un organe de soutien en suspension du boîtier (5), **en ce que** le capot (C4) est agencé en un disque (4) évidé (4a) centré suivant la direction verticale (DV1) d'extension de la prise (1), via son évidement (4a) qui est emboîté sur une rehausse cylindrique (6b) intégrée à la face supérieure de la paroi supérieure (6) du boîtier (5), **en ce que** le disque (4) coiffe la paroi supérieure (6) du boîtier (5) en s'étendant en débord transversal de la périphérie de la paroi supérieure (6) du boîtier (5), l'évidement (4a) du disque (4) ménageant le passage (4a) d'accès au dit au moins un connecteur de service (10a, 10b), ledit passage (4a) étant disposé en regard de ladite au moins une ouverture (12a, 12b) que comporte la paroi supérieure (6) du boîtier (5), **en ce que** le disque (4) est fixé par crochetage à la paroi supérieure (6) du boîtier (5), via des organes de crochetage (34, 35) coopérant entre eux dont le disque (4) et l'épaulement (6a) de la paroi supérieure (6) du boîtier (5) sont respectivement équipés.

9. Prise (1) électrique selon la revendication 8, **caractérisée en ce que** le disque (4) est formé d'une paroi (26) dont le bord périphérique ménage à sa base une assise (26c) du disque (4) s'étendant suivant un plan horizontal perpendiculaire à la direction verticale (DV1) d'extension de la prise (1), **en ce que** la paroi (26) formant le disque (4) s'étend en élévation en rehausse de son assise (26c) en comportant des flancs (26a, 26b) d'orientations concourantes qui sont inclinés l'un par rapport à l'autre inversement vers l'assise (26c) du disque (4), dont un flanc périphérique (26a) du disque (4) ménageant son assise (26c) qui est prolongé par un flanc central (26b) délimitant l'évidement (4a) du disque (4), une nervure (26d) circulaire de rigidification du disque (4) étant ménagée à la jonction entre le flanc périphérique (26a) du disque (4) et le flan central (26b) comportant son évidement (4a).

10. Prise (1) électrique selon la revendication 9, **caractérisée en ce que** les organes de crochetage (34, 35) coopérant entre eux dont le disque (4) et l'épaulement (6a) de la paroi supérieure (6) du boîtier (5) sont respectivement équipés, comprennent des crochets (35) équipant le disque (4) en étant intégrés à la nervure (26d) de rigidification du disque (4), les crochets (35) étant angulairement répartis suivant l'extension circulaire de ladite nervure (26d) et coopérant par emboîtement réversible avec des saignées (34) respectives qui sont ménagées en périphérie de l'épaulement (6a) de la paroi supérieure (6) du boîtier (5).
